**Europäisches Patentamt**

**European Patent Office**

**Office européen des brevets**

(19)

(11) Veröffentlichungsnummer: **0 026 808**
**B1**

(12) **EUROPÄISCHE PATENTSCHRIFT**

(45) Veröffentlichungstag der Patentschrift: **21.12.83**

(51) Int. Cl.³: **F 24 J 3/02, E 04 D 3/30**

(21) Anmeldenummer: **80103174.1**

(22) Anmeldetag: **07.06.80**

(54) Dachabdeckung oder Fassadenverkleidung und Verfahren zur Herstellung einer Platte für diese Dachabdeckung oder Fassadenverkleidung.

(30) Priorität: **30.08.79 DE 2935001**
**15.04.80 DE 3014295**

(43) Veröffentlichungstag der Anmeldung:
**15.04.81 Patentblatt 81/15**

(45) Bekanntmachung des Hinweises auf die Patenterteilung:
**21.12.83 Patentblatt 83/51**

(84) Benannte Vertragsstaaten:
**AT BE CH FR GB IT LI NL SE**

(56) Entgegenhaltungen:
**EP - A - 0 010 618**
**EP - A - 0 028 112**
**DE - A - 2 256 584**
**DE - A - 2 747 850**
**DE - A - 2 808 724**
**FR - A - 2 330 974**
**FR - A - 2 396 939**
**FR - A - 2 404 180**
**GB - A - 784 484**
**GB - A - 857 291**
**US - A - 4 000 850**

(73) Patentinhaber: **Kabel- und Metallwerke**
**Gutehoffnungshütte Aktiengesellschaft**
**Kabelkamp 20 Postfach 260**
**D-3000 Hannover 1 (DE)**

(72) Erfinder: **Schimmelpfennig, Klaus, Dipl.-Ing.**
**Am Hohlen Holze 20**
**D-3008 Garbsen 1 (DE)**
Erfinder: **Busch, Michael, Dipl.-Ing.**
**Wilhelm-Busch-Strasse 6**
**D-3000 Hannover (DE)**
Erfinder: **Juhrig, Bernd, Ing.-grad.**
**Am Pferdemarkt 5**
**D-3012 Langenhagen 1 (DE)**
Erfinder: **Bogdanski, Franz, Dr.**
**Buchenkamp 2**
**D-3214 Völksen (DE)**

**Dachabdeckung oder Fassadenverkleidung und Verfahren zur Herstellung einer Platte für diese Dachabdeckung oder Fassadenverkleidung**

Die vorliegende Patentanmeldung betrifft eine Dachabdeckung oder Fassadenverkleidung mit Platten, Tafeln o. ä. aus Metallblech, vorzugsweise auf Kupfer, die mit Haltebügeln an einem die Dachabdeckung oder Fassadenverkleidung tragenden Gebäudeteil befestigt sind, bei welcher die Platten, Tafeln o. ä. an ihren Längskanten verlaufende Rippen und vorzugsweise eine in der Mitte verlaufende Rippe aufweisen, in welche nach auswärts abgebogene Hakenflansche der Haltebügel eingreifen, von denen einer nur bei gegenüber einer Platte, Tafel o. ä. Querrichtung geneigter Lage in eine Rippe einführbar und durch Schwenken der Platte, Tafel o. ä. und/oder des Haltebügels verhakbar ist, während die restlichen Rippen in den anderen Hakenflansch bzw. auf eine Rippe einrastbar sind.

Durch die zunehmende Verknappung und Verteuerung von Primärenergie wie Erdöl, Kohle, Erdgas usw. gewinnt die Nutzung von Niedertemperaturwärme, wie Abwärme, Wärme aus der Umgebungsluft und der Globalstrahlung zunehmend an Bedeutung. Dabei ist es bereits bekannt die relativ großen Flächen von Dächern für die Gewinnung von Energie aus der Umgebung nutzbar zu machen.

Aus der DE—A—27 32 758 ist eine Dachabdeckung aus Plattenförmigen Elementen aus Metall bekannt, bei welcher die Dachabdeckung aus einer Vielzahl von schindelförmigen Elementen gebildet wird, welche leicht konisch verlaufende Stege aufweisen, aufgrund welcher die einzelnen Elemente übereinanderlappend ineinandergeschoben werden können und welche zwischen den Stegen eine Sicke aufweisen, in welche ein Rohr eingelegt wird. Diese Art der Dachabdeckung hat sich als Absorber für Energie aus der Umluft als hervorragend erwiesen und erweckt darüber hinaus den optischen Eindruck einer Ziegeleindeckung. Ein Nachteil dieser Dachabdeckung ist darin zu sehen, daß insbesondere für große Dachflächen der Montageaufwand relativ hoch ist.

Es ist weiterhin eine Dachabdeckung bekannt geworden, (DE—A—22 56 584) welche aus vorzugsweise verrippten Platten, Tafeln o. ä., insbesondere aus Blech, gebildet ist, welche mit Haltebügeln an einem Gebäudeteil, beispielsweise den Dachlatten oder einer Holzverschalung befestigt werden. Diese Dachabdeckung hat sich als sehr montagefreundlich erwiesen, jedoch sind Maßnahmen zur Gewinnung von Umweltenergie nicht vorgesehen.

Aus der US—A—4 000 850 ist ein sonnenbeheiztes bzw. gekühltes Bauwerk bekannt, welches aus Elementen zusammengesetzt ist. Oberhalb der Dachhaut sind Solarkollektoren angebracht, die aus zwei Blechplatten bestehen, die versetzt zueinander verlaufende Sicken aufweisen, so daß sich zwischen den Sicken Strömungskanäle für das Wärmetauschmedium bilden. Ein Nachteil dieser Konstruktion besteht darin, daß die zwischen den Sicken verlaufenden Kanäle so groß sind, daß das Gewicht des Solarkollektors, wenn er beispielsweise von Wasser durchströmt wird, so hoch ist, daß sich die Doppelplatte zwischen den Auflagen durchsenken würde. Weiterhin ist das Anschließen der im Querschnitt rechteckformigen Kanäle so aufendig und unsicher, daß diese Konstruktion zum Scheitern verurteilt ist.

Aus der FR—A—2 330 974 ist ein Solarkollektor bekannt, der aus einem doppelwandigen Strangpreßprofil besteht, bei dem sich zwischen den Wandungen Strömungskanäle befinden. Da beim Strangpressen Mindestwanddicken nicht unterschritten werden können, führt auch diese Ausgestaltung zu einer erheblichen Gewichtserhöhung. Weiterhin ist auch die Anschlußtechnik der Kanäle an Rohre mit großen Schwierigkeiten behaftet.

Die GB—A—784 484 und die GB—A—857 291 beschreiben ein Verfahren zur Herstellung von Wärmetauschern, insbesondere Kühlschrankverdampfer, bei dem ein Metallblock mit Durchgangsbohrungen versehen wird, die innere Oberfläche der Durchgangsbohrungen mit einem Schweißstopmittel beschichtet wird und der Block dann warmgewaltz wird. Zur Schaffung der Kanäle werden die flachgewalzten Bohrungen aufgeblasen. Die Verwendung solcher Wärmetauscherbleche als Wärmeenergie aus der Umgebung aufnehmende Dach- bzw. Fassadenteile ist nicht erwähnt.

Aus der EP—A—0010618 ist ein Verfahren zur Herstellung von Wärmetauscherblechen bekannt, bei dem ein mit mindestens einer Bohrung versehener Metallblock hergestellt, in die Bohrungen ein Schweißstoppmittel eingebracht, der Metallblock in Längsrichtung der Bohrungen bis auf das Endmaß heruntergewaltz wird und anschließend die Bohrungen aufgebläht werden. Dieses Dokument fällt unter Art. 54 (3) des Europäischen Patentübereinkommens.

Der Erfindung liegt Aufgabe zugrunde, die bekannte Dachabdeckung nach der DE—A—2 256 584 oder Fassadenverkleidung dahingehend zur verbessern, daß mit ihr Energie aus der Umgebung aufgenommen und zur mittelbaren oder unmittelbaren Beheizung von Gebäuden nutzbar gemacht werden kann.

Diese Aufgabe wird bei einer Dachabdeckung oder der Fassadenverkleidung der eingangs erwähnten Art dadurch gelöst, daß zwischen jeweils zwei Rippen mindestens ein parallel zu den Rippen verlaufender Kanal zur Führung einer Energie aus der Umgebung der Platte, Tafel o. ä. aufnehmenden Arbeitsmediums angeordnet ist, und der oder die Kanäle innerhalb der Wandung der Platte, Tafel o. ä. angeordnet sind, und die Wanddicke der Kanäle sich von der Wanddicke der Platten, Tafeln o. ä. unterscheidet, vorzugsweise gleich der Hälfte der Wanddicke der Platten, Tafeln o. ä. ist, und daß auf das die Dachabdeckung oder Fassadenverkleidung tragende Gebäudeteil eine Konterlattung unter Zwischenlegung einer wasserdichten beidseitig belüfteten Bahn, vorzugeweise aus thermoplastischem Kunststoff aufgebracht ist.

Der wesentliche Vorteil der Erfindung ist darin zu sehen, daß die von der Dachabdeckung oder Fassadenverkleidung aufgenommene Energie direkt von dem Arbeitsmedium aufgenommen werden kann, ohne die Montagefreundlichkeit zu beeinträchtigen und ohne daß thermische Barrieren den Wärmefluß behindern.

Die Konterlattung hat den Vorteil, daß zwischen der wasserdichten Bahn und den Metallplatten oder Tafeln eine Luftschicht entsteht, die einmal das entstehende Schwitzwasser besser abführen kann, zum anderen bewirkt diese Maßnahme, daß die Platten, Tafeln o. ä. Wärmeenergie von beiden Seiten aufnehmen können. Die wasserdichte Bahn aus Kunststoff soll ggf. herabtropfendes Schwitzwasser zur Traufe ableiten.

Die Kanäle sind nahtlos ausgebildet und ihre Wanddicke entspricht vorzugsweise der halben Wanddicke der Platte oder Tafel. Es ist aber auch möglich, die Wanddicke der Kanäle unterschiedlich auszubilden, wobei die größere Wanddicke vorzugsweise an der Außenseite der Platte angeordnet sein sollte.

Zweckmäßigerweise sind zwischen jeweils zwei Rippen zwei Kanäle vorgesehen, deren Abstand zueinander wesentlich größer ist als ihr Abstand zu den Rippen, damit auf beiden Seiten jeweils eines Kanals gleiche Wärmeleistungsdichten auftreten.

Obwohl die Dachabdeckung oder Fassadenverkleidung gemäß der Lehre der Erfindung auch als sogenannter Solarkollektor eingesetzt werden kann, hat es sich insbesondere für den mitteleuropäischen Raum als vorteilhaft erwiesen, die erfindungsgemäße Dachabdeckung oder Fassadenverkleidung als Energiedach oder Energiefassade einzusetzen. In diesem Fall ist das Arbeitsmedium eine Flüssigkeit, zum Beispiel eine Gefrierschutzmittellösung. Das Arbeitsmedium überführt die über die Dachabdeckung oder Fassadenverkleidung aufgenommene Wärmeenergie über einen Wärmetauscher, zum Beispiel in den Kreislauf einer Wärmepumpenanlage. Für diesen Einsatzfall ist es besonders günstig, zwischen den Haltebügeln und dem Gebäudeteil eine Schicht aus einem wärmedämmendem Material anzuordnen. Sie soll einmal verhindern, daß das die Dachabdeckung oder Fassadenverkleidung tragende Gebäudeteil durch das Arbeitsmedium unter die Umgebungstemperatur abgekühlt wird, zum anderen verhindern, daß das Gebäudeteil durch das Arbeitsmedium zu weit unter die Umgebungstemperatur abgekühlt wird, zum anderen verhindern, daß das an der Innenseite der Dachabdeckung oder Fassadenverkleidung entstehende Schwitzwasser mit dem Gebäudeteil in Berührung kommt. Zu diesem Zwecke überragt die Schicht dieses Gebäudeteil (Dachlatten) sowohl zur Traufe als auch zum First. Das entstehende Schwitzwasser fließt durch Spalte zwischen der Schicht und dem Haltebügel zur zur Traufe weisenden Kante und tropft von dort ab. Sowohl die Haltebügel als auch die Schicht aus wärmedämmendem Material sind im Bereich der Kanäle ausgekehlt. Dies führt zu einer besseren Abstützung der Platte, Tafel o. ä. und schützt die Kanäle gegen mechanische Beschädigung. Die Mindestwanddicke der Kunststoffbahn sollte 0,3 cm sein, vorzugsweise sollte sie eine Dicke von 2 cm aufweisen. Zwischen jeweils zwei benachbarten Gebäudeteilen (Dachsparren) sind Bahnen aus wärmedämmendem Material, vorzugsweise aus Mineralwolle angeordnet. Diese Bahnen, die zweckmäßigerweise zwischen jeweils zwei Dachsparren auf einer Verschalung aufliegen, dienen der thermischen Isolierung der Dachkonstruktion. Wesentlich dabei ist, daß zwischen der Kunststoffbahn und der Wärmedämmung ein Luftspalt verbleibt, durch den unter Umständen auftretendes Schwitzwasser abgeführt werden kann.

Un Wärmeenergieaufnahme optimieren und die Anschlußarbeiten zur Verbindung der einzelnen Kanäle auf der Baustelle auf ein Minimum reduzieren zu können, ist weiterhin vorgesehen, daß die zwischen der mittleren Rippe der Platte und einer außenliegenden Rippe angeordneten Kanäle in einer Richtung vom Arbeitsmedium durchströmt sind, während die zwischen der mittleren Rippe und der anderen außenliegenden Rippe angeordneten Kanäle in Gegenrichtung durchströmt snd und daß die diesseits und jenseits der mittleren Rippe angeordneten Kanäle, vorzugsweise traufenseitig durch Rohrstrücke verbunden sind und die firstseitig gelegenen Enden der Kanäle an die Vor- bzw. Rücklaufleitung des Mediumkreislaufs angeschlossen sind. Diese Lösung erbringt den Vorteil, daß die Platten werksseitig bereits mit den Rohrstücken versehen werden können und lediglich an die Vor- und Rücklaufleitung des Arbeitsmediumkreislaufes angeschlossen werden müssen. Darüber hinaus ist auch die Verbindung der Enden der Kanäle mit der Vor- bzw. Rücklaufleitung wesentlich einfacher. Die einzelnen Kanäle sind zweckmäßigerweise durch Rohrstücke gleicher Länge verbunden. Da die Querschnitte der einzelnen Kanäle und die Querschnitte der Rohrstücke annähernd gleich sind, ergeben sich somit annähernd gleiche Druckverhältnisse, so daß jeder Kanal pro Zeiteinheit von der gleichen Menge des Arbeitsmediums durchströmt wird. Die Rohrstücke sind zweckmaßigerweise als U-förmig gebogene konfektionierte Teile ausgebildet.

Zur Herstellung einer Platte, Tafel o. ä. für die

oben beschriebene Dachabdeckung oder Fassadenverkleidung hat sich ein Verfahren als besonders zweckmäßig erwiesen, bei dem man in einen beliebig hergestellten Metallblock entsprechend der Anzahl und Lage der gewünschten Kanäle Bohrungen einbringt, vorzugsweise durch Tiefbohren, daß man in die Bohrungen ein Trennmittel einführt, den Metallblock in Richtung der Bohrungen warmwalzt, nach dem Warmwalzen den Walzblock allseitig fräst, darauf den Walzblock auf das Maß der Wanddicke für die Platte kalt herunterwalzt, das gewalzte Band ggf. besäumt, daß man die Rippen durch Rollverformen erzeugt und anschließend die Kanäle durch Aufblasen herstellt. Dieses Verfahren hat sich als äußerst wirtschaftlich erwiesen und schafft eine Platte oder Tafel, welche sich leicht montieren läßt und einen optimalen Wärmeübergang von der Platte zum Arbeitsmedium gewährleistet.

Die Erfindung ist anhand der in den Figuren 1 bis 3 schematisch dargestellten Ausführungsbeispiele näher erläutert.

Es zeigen:

Figur 1 eine Ansicht einer Dachabdeckung gemäß der Lehre der Erfindung.

Figur 2 eine Draufsicht auf ein Dachabdeckung.

Figur 3 ein Detail am unteren Ende einer Platte.

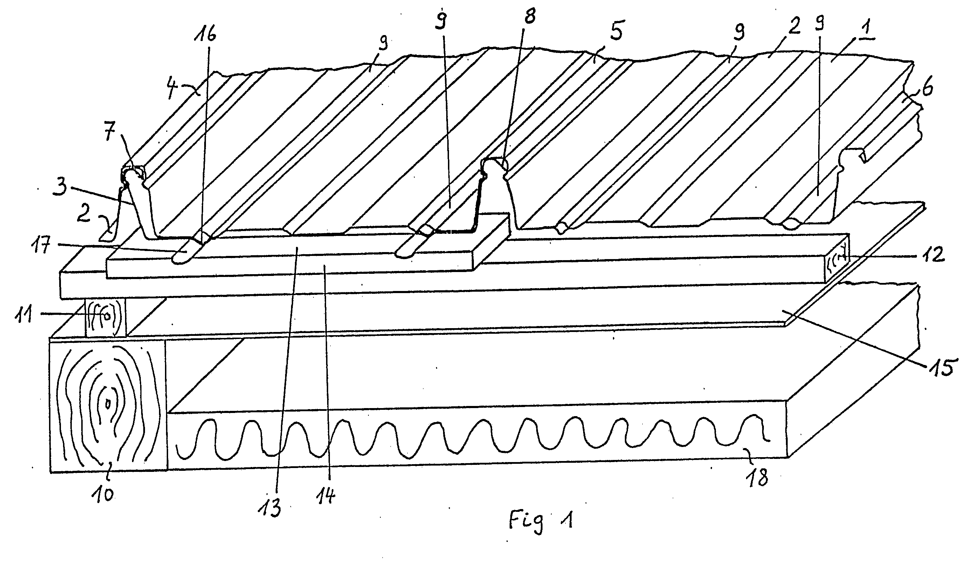

Die Figur 1 zeigt einen Ausschnitt aus einer Dachkonstruktion, welche aus einer metallischen wasserdichten Dachhaut 1 sowie der Unterkonstruktion besteht. Die Dachhaut 1 ist aus einer Vielzahl von Platten 2 aufgebaut, welche an der Unterkonstruktion mittels Haltebügeln 3 befestigt sind. Zu diesem Zweck weisen die Platten 2 Rippen 4, 5 und 6 auf, die entweder in die Rippen der benachbarten Platte 2 einschnappen (Rippe 6) oder aber mit den Haltebügel 3 verklammert sind (Rippen 4 und 5) Die Haltebügel 3 weisen Hakenflansche 7 und 8 auf, die mit den Rippen verhakt werden (Hakenflansch 7 und Rippe 4) oder aber in die Rippen einschnappen (Hakenflansch 8 und Rippe 5). Die Platten 2 und deren Befestigung mittels Haltebügeln ist aus der DE—A—22 56 584 bekannt. Die Platte oder Tafel 2 erstreckt sich vorteilhafterweise als eine Bahn vom First bis zur Traufe.

Erfindungsgemäß weisen die Platten 2 in Richtung vom First zur Traufe verlaufene Kanäle 9 auf, die von einem Wärmeenergie aus der Umgebung aufnehmenden Arbeitsmedium durchströmt werden. Die Kanäle 9 sind nahtlos ausgebildet, d.h. nach einem speziellen Verfahren hergestellt. Dieses Verfahren besteht darin, daß man in einen Metallblock, vorzugsweise aus Kupfer, durchgehende Bohrungen einbringt, vorzugsweise mittels Tiefbohren, in die Bohrungen ein Trennmittel einführt und die Metallblöcke in einem oder mehreren Walzstichen warm herunterwalzt. Bei diesem Warmwalzen werden die duch Tiefbohren erzeugten Bohrungen abgeflacht, wobei aber eine Materialtrennung vorhanden bleibt. Nach dem Warmwalzen werden die Oxidschichten abgefräst und in nachfolgenden Kaltwalzstichen das warmgewalzte Band auf das Endmaß heruntergewalzt. Das so vorbereitete Metallband wird in eine Rollformvorrichtung eingegeben, in welcher die Rippen 4, 5 und 6 und ggf. zwischen den Rippen 4, 5, und 6 vorgesehene Profilierungen eingerollt werden. Nach dem Rollverformen werden die Kanäle 9 durch Aufblasen erzeugt. Bringt man die Bohrungen symmetrisch in den Metallblock ein, ist die Wanddicke der Kanäle gleich und entspricht der Hälfte der Wanddicke der Platte 2. Est ist aber auch möglich, die Bohrungen asymetrisch in den Metallblock einzubringen und dadurch unterschiedliche Wanddicken der Kanäle 9 zu erzeugen.

Die Dachabdeckung aus den Platten 2 kann als sogenannter Solarkollektor verwendet werden. Zwecks Erzielung einer höheren Temperatur des Arbeitsmediums ist es für diesen Anwendungsfall zweckmäßig, die Dachabdeckung mit einer nicht dargestellten transparenten Abdeckung zu versehen, die vorteilhafterweise aus Polyacryl besteht und zwischen jeweils zwei Rippen 4 und 5 bzw. 5 und 6 federnd eingeklemmt wird. Diese Ausführungsform wird in sonnenreichen Zonen bevorzugt Anwendung finden.

In gemäßigteren Zonen, wie beispielsweise in Mitteleuropa, wird der Schwerpunkt der Anwendung der erfindungsgemäßen Dachabdeckung oder Fassadenverkleidung eher auf dem Gebiet der sogenannten Absorberflächen liegen. In diesem Fall sind die Kanäle 9 vorzugsweise von einem nicht gefrierenden Arbeitsmedium durchströmt, welches die aufgenommene Wärmeenergie über einen Wärmetauscher, zum Beispiel an die Kaltseite einer Wärmepumpenanlage überführt. Das Arbeitsmedium hat in diesem Fall normalerweise eine Temperatur, welche unterhalb der Umgebungstemperatur liegt, so daß die Schwiztwasserbildung und die Abführung des Schwitzwassers besonders beachtet werden muß. Die Unterkonstruktion besteht deshalb aus den Dachsparren 10, auf welche eine Konterlattung 11 aufgebracht ist. Auf dieser Konterlattung 11 liegen die eigentlichen Dachlatten 12 auf. Die Haltebügel 3 sind auf den Dachlatten 12 unter Zwischenlegung einer wärmeisolierenden Schicht 13 befestigt. Die wärmeisolierende Schicht 13 soll eine Abkühlung der Dachlatten 12 und damit eine Schwitzwasserbildung an den Dachlatten 12 verhindern. Des weiteren dient diese Schicht 13 dazu, das sich an der Unterseite der Platten 1 und der Haltebügel 3 sammelnde Schwitzwasser zwischen jeweils zwei Dachlatten 12 abtropfen zu lassen. Zue diesem Zweck ist die wärmeisolierende Schicht 13 in Neigungsrichtung des Daches breiter als die Dachlatten 12. Das an der Unterseite der Dachplatten 2 abtropfende Schwitzwasser fließt zwischen dem Haltebügel 3 und der wärmeisolierenden Schicht 13 an die traufenseitige Kante 14 der Schicht 13 und tropft von dieser ab. Die herabfallenden Tropfen werden von einer zwischen dern Dachsparren 10 und der Konterlattung 11 angeordneten Kunststoffbahn 15 aufgefangen und traufenwärts abgeführt. Die Kunststoffbahn 15 ist beispielsweise 3 mm start und ist aus sich traufenwärts überlappenden Bahnen aufgebaut.

Zur Aufnahme und zum mechanischen Schutz des Kanals 9 weisen die Haltebügel im Bereich der Kanäle 9 Auskehlungen 16 auf, welche in entsprechenden Auskehlungen 17 der Schicht 13 liegen. Zwischen jeweils zwei Dachsparren 10 liegt eine wärmeisolierende Schicht 18, beispielsweise in Form von Mineralwolle oder Schaumstoffplatten. Die Höhe der wärmeisolierenden Schicht 18 richtet sich nach der Dachsparrenlänge. Durch diese Maßnahme wird zwischen der Kunststoffbahn 15 und der wärmeisolierenden Schicht 18 eine Hinterlüftung geschaffen, welche einen evtl. auftretenden Schwitzwasserfilm schnell abzuführen vermag. Dem gleichen Zweck dient die Konterlattung 11, die darüber hinaus noch den Vorteil hat, daß durch die nunmehr mögliche Hinterlüftung auch von der Unterseite der Platte 2 Wärmeenergie aufgenommen werden kann.

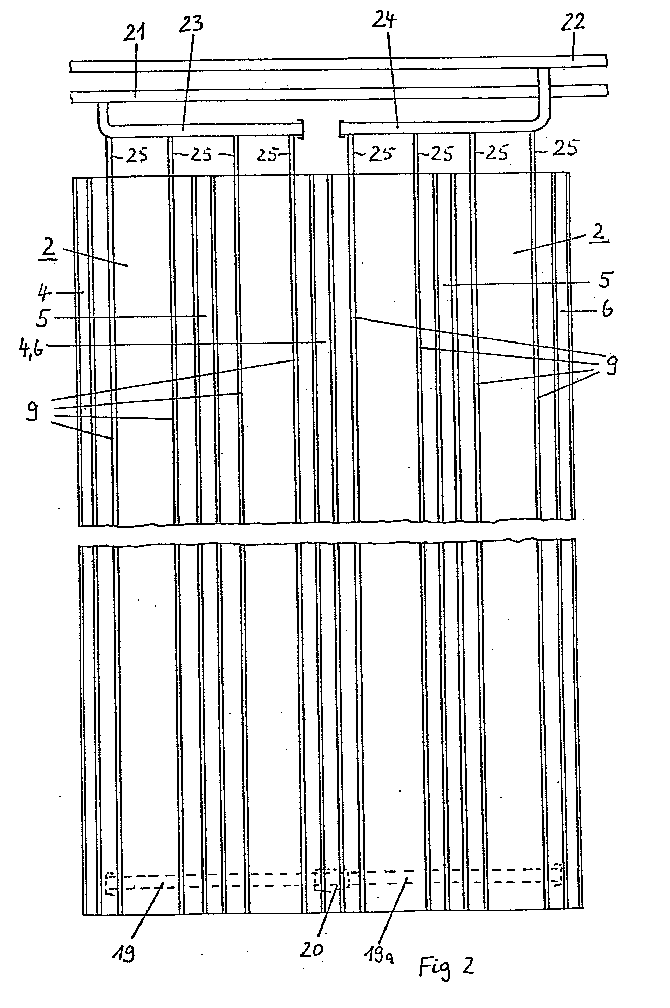

Die Figur 2 zeigt das Anschlußschema der Kanäle 9 für ein Energiedach oder einer Energiefassade gemäß der Lehre der Erfindung. Die Kanäle 9 der Platte 2 sind durch unterhalb der Platten 2 gelegene Rohrstücke 19 bzw. 19a miteinander verbunden. Die Rohrstücke 19 und 19a sind an einem Ende flüssigkeitsdicht verschlossen und werden auf der Baustelle an ihren offenen Enden, wie bei 20 dargestellt, miteinander verbunden. Firstseitig sind Vorlauf 21 und Rücklauf 22 des Mediumkreislaufes nebeneinander angeordnet. Über Rohrbögen 23 und 24 sowie Verbindungsröhrchen 25 sind Vorlauf 21 und Rücklauf 22 mit den Kanälen verbunden. Es entsteht somit ein Kreislauf des Arbeitsmediums vom Vorlauf 21 über den Rohrbogen 23 und die Verbindungsleitung 25 zu den Kanälen 9 über die Rohrstücke 19 und 19a wieder hin zu den Kanälen 9 über die Verbindungsrohre 25 zum Rohrbogen 24 in den Rücklauf 22. Dieser Kreislauf, der Anwendung findet, wenn Vor- und Rücklaufleitung firstseitig angeordnet sind, gewährleistet, daß das Arbeitsmedium in den Kanälen 9 in jeweils zwei Platten 2 mit gleicher Geschwindigkeit fließt. Ein thermischer Kurzschluß zwischen zwei benachbarten Kanälen 9, welche an den Außenkanten der Platten 2 liegen, ist dadurch vermieden, daß der Wärmeübergang zwischen zwei Platten 2 im Bereich der Rippen 4 und 6 (s. Figur 1, linke Hälfte der Figur) infolge der linienförmigen Berührung schlecht ist. Auf die Rohrbögen 23 und 24 sowie die Verbindungsleitungen 25 kann in einer weiteren Ausgestaltung der Erfindung verzichtet werden, indem man die Leitungsstücke 19 und 19a zu einer gemeinsamen dehnungskompensierten Vorlaufleitung verbindet und firstseitig die gleiche Anordnung zu einer gemeinsamen Rücklaufleitung schafft.

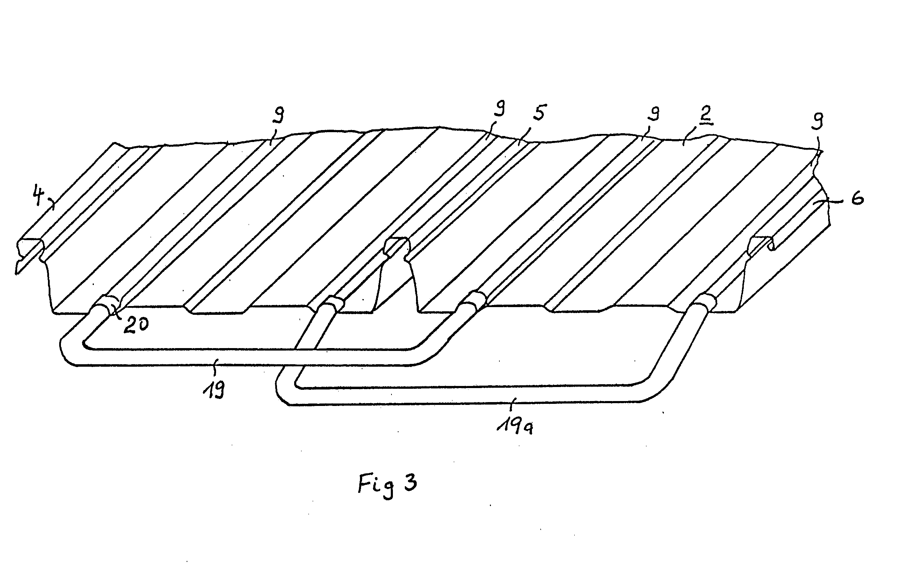

Die Figur 3 zeigt das traufenseitige Ende einer Metallplatte 2. Die Kanäle 9 sind untereinander durch Rohrbögen 19 und 19a verbunden, die ebenso wie die Platte 2 aus Kupfer bestehen. Die Enden der Rohrbögen 19 und 19a sind in das leicht aufgeweitete Ende 10 der Kanäle 9 eingeschoben und dort hart verlötet. Die Rohrbögen 19 und 19a haben die gleiche Länge, so daß das Arbeitsmedium von der Vorlaufleitung bis zur Rücklaufleitung durch die Platten 2 den gleichen Weg zurücklegt. Die Rohrbögen 19 und 19a werden zweckmäßigerweise bereits werkseitig engelötet, so daß Lötfehler auf der Montagestelle, die erfahrungsgemäß häufiger auf der Montagestelle als bei einer Werkstattfertigung auftreten, weitestgehend vermieden sind. Auf der Montagestelle brauchen dann nur noch die freien Enden der Kanäle 9 an die Vor- bzw. Rücklaufleitung angeschlossen werden. Bei dem in der Figur 3 dargestellten Ausführungsbeispiel sind die zwischen den Rippen 4 und 5 gelegenen Kanäle 9 an die Vorlaufleitung und die zwischen den Rippen 5 und 6 gelegenen Kanäle 9 an die Rücklaufleitung angeschlossen.

Unter Umständen kann es sinnvoll sein, an die freien Enden der Kanäle 9 ebenfalls bereits werksseitig nicht mehr dargestellte Y-förmige Rohrstücke einzulöten, so daß an der Montagestelle nur noch je ein Anschluß für Vor- und Rücklauf pro Platte notwendig ist.

**Patentansprüche**

1. Dachabdeckung oder Fassadenverkleidung mit Platten, Tafeln (2) o. ä. aus Metallblech, vorzugsweise aus Kupfer, die mit Haltebügeln (3) an einem die Dachabdeckung oder Fassadenverkleidung tragenden Gebäudeteil (12) befestigt sind, bei welcher die Platten, Tafeln (2) o. ä. an ihren Längskanten verlaufende Rippen (4, 6) und vorzugsweise eine in der Mitte verlaufende Rippe (5) aufweisen, in welche nach auswärts abgebogene Hakenflansche (7, 8) der Haltebügel (3) eingreifen, von denen einer nur bei gegenüber einer Platte, Tafel (2) o. ä. in Querrichtung geneigter Lage in eine Rippe (4, 6) einführbar und durch Schwenken der Platte, Tafel (2) o. ä. und/oder des Haltebügels (3) verhakbar ist, während die restlichen Rippen (4, 5, 6) in den anderen Hakenflansch (7, 8) bzw. auf eine Rippe (4, 5, 6) einrastbar sind, dadurch gekennzeichnet, daß zwischen jeweils zwei Rippen (4, 5, 6) mindestens ein parallel zu den Rippen (4, 5, 6) verlaufender Kanal (9) zur Führung eines Energie aus der Umgebung der Platte, Tafel (2) o. ä. aufnehmenden Arbeitsmediums angeordnet ist, und der oder die Kanäle (9) innerhalb der Wandung der Platte, Tafel (2) o. ä. angeordnet sind und die Wanddicke der Kanäle (9) sich von der Wanddicke der Platten, Tafeln (2) o. ä. unterscheidet, vorzugsweise gleich der Hälfte der Wanddicke der Tafeln, Platten (2) o. ä. ist, und daß auf das die Dachabdeckung oder Fassadenverkleidung tragende Gebäudeteil (10) eine Konterlattung (11) unter Zwischenlegung einer wasserdichten beidseitig belüfteten Bahn (15), vorzugsweise aus thermoplastischem Kunststoff, aufgebracht ist.

2. Dachabdeckung oder Fassadenverkleidung nach Anspruch 1, dadurch gekennzeichnet, daß zwischen jeweils zwei Rippen (4, 5, 6) zwei Kanäle (9) vorgesehen sind, deren Abstand zueinander wesentlich größer ist als ihr Abstand zu den Rippen (4, 5, 6).

3. Dachabdeckung oder Fassadenverkleidung nach Anspruch 1 oder 2, dadurch gekennzeichnet, daß die Rippen (4, 5, 6) an ihren Flanken mit Sicken versehen sind, in die durchsichtige Platten, vorzugsweise aus Kunststoff, federnd eingeklemmt sind.

4. Dachabdeckung oder Fassadenverkleidung nach einem der Ansprüche 1 bis 3, dadurch gekennzeichnet, daß zwischen den Haltebügeln (3) und dem die Dachabdeckung oder Fassadenverkleidung tragenden Gebäudeteil (10, 11, 12) eine Schicht (13) aus einem wärmedämmendem Material angeordnet ist.

5. Dachabdeckung oder Fassadenverkleidung nach einem der Ansprüche 1 bis 4, dadurch gekennzeichnet, daß die Haltebügel (3) im Bereich der Kanäle (9) ausgekehlt sind.

6. Dachabdeckung oder Fassadenverkleidung nach einem der Ansprüche 1 bis 5, dadurch gekennzeichnet, daß die Schicht (13) aus wärmedämmendem Material im Bereich der Kanäle (9) ausgekehlt ist.

7. Dachabdeckung oder Fassadenverkleidung nach einem der Ansprüche 1 bis 6, dadurch gekennzeichnet, daß die Konterlattung (11) zwischen zwei wasserdichten belüfteten Folien beidseitig angeordnet ist.

8. Dachabdeckung oder Fassadenverkleidung nach einem der Ansprüche 1 bis 7, dadurch gekennzeichnet, daß die wasserdichte hinterlüftete Bahn (15) eine Mindestdecke von 0,3 cm, vorzugsweise eine Dicke von 2 cm aufweist und wärmedämmend ist.

9. Dachabdeckung nach einem der Ansprüche 1 bis 8, dadurch gekennzeichnet, daß die zwischen der mittleren Rippe (5), der Platte (2) und einer außenliegenden Rippe (4) angeordneten Kanäle (9) in einer Richtung vom Arbeitsmedium durchströmt sind, während die zwischen der mittleren Rippe (5) und der anderen außenliegenden Rippe (6) angeordneten Kanäle (9) in Gegenrichtung durchströmt sind und daß die diesseits und jensits der mittleren Rippe (5) angeordneten Kanäle (9), vorzugsweise traufenseitig durch Rohrstücke (19, 19a) verbunden sind und die firstseitig gelegenen Enden der Kanäle (9) an die Vor- bzw. Rücklaufleitung des Mediumkreislaufs angeschlossen sind.

10. Dachabdeckung nach Anspruch 1, dadurch gekennzeichnet, daß die einzelnen Kanäle (9) durch Rohrstücke (19, 19a) gleicher Länge verbunden sind.

11. Dachabdeckung nach Anspruch 10, dadurch gekennzeichnet, daß die Rohrstücke (19, 19a) U-förmig gebogen sind.

12. Verfahren zur Herstellung einer Platte, Tafel o. ä. für eine Dachabdeckung oder Fassadenverkleidung nach einem der Ansprüche 1 bis 11, dadurch gekennzeichnet, daß man in einen beliebig hergestellten Metallblock entsprechend der Anzahl und Lage der gewünschten Kanäle wie an sich bekannt Bohrungen anbringt, vorzugsweise durch Tiefbohren, daß man wie an sich bekannt in die Bohrungen ein Trennmittel einführt, den Metallblock wie an sich bekannt in Richtung der Bohrungen warmwalzt, nach dem Warmwalzen den Walzblock allseitig fräst, und darauf den Walzblock auf das Maß der Wanddicke für die Platte, Tafel o. ä. kalt herunterwalzt, das gewalzte Band ggf. besäumt und daß man die Rippen durch Rollverformen erzeugt und anschließend die Kanäle wie an sich bekannte durch Aufblasen herstellt.

## Revendications

1. Couverture de toit ou revêtement de façade avec des plaques panneaux (2) ou autres en tôle métallique, de préférence en cuivre, qui sont fixés par des étriers de maintien (3) à une partie de bâtiment (12) portant la couverture de toit ou le revêtement de façade, ces plaques, panneaux (2) ou autres présentant des nervures (4, 6) s'étendant sur leurs bors longitudinaux, et de préférence une nervure (5) s'étendant au milieu, dans lesquelles viennent en prise des collerettes à crochets (7, 8) des étriers de maintien (3) qui sont recourbées en-dehors, dont l'une, seulement dans une position inclinée dans le sens transversal par rapport à une plaque, panneau (2) ou autre, peut s'introduire dans une nervure (4, 6) et peut s'accrocher par pivotement de la plaque, panneau (2) ou autre et/ou de l'étrier de maintien (3), tandis que les nervures restantes (4, 5, 6) peuvent se cranter dans l'autre collerette à crochet (7, 8) ou sur une nervure (4, 5, 6), caractérisé en ce que, entre deux nervures (4, 5, 6), chaque fois est ménagé au moins un canal (9), s'étendant parallèlement aux nervures (4, 5, 6), pour y faire passer un agent de travail recevant de l'énergie de l'environnement de la plaque, panneau (2) ou autre, et le ou les canaux (9) sont disposés à l'intérieur de la plaque, panneau (2) ou autre, et l'épaisseur de paroi des canaux (9) se différencie de l'épaisseur de paroi des plaques, panneaux (2) ou autres, de préférence est égale à la moitié de l'épaisseur de paroi des plaques, panneaux (2) ou autres, et en ce que sur la partie de bâtiment (10) portant la couverture de toit ou le revêtement de façade est mis en place un contrelattis (11) avec interposition d'une table-support (15) aérée des deux côtés, étanche à l'eau, de préférence en matière synthétique thermoplastique.

2. Couverture de toit ou revêtement de façade selon la revendication 1, caractérisé en ce que entre deux nervures (4, 5, 6), sont prévus chaque fois deux canaux (9), dont la distance de l'un à l'autre est notablement plus grande que leur distance aux nervures (4, 5, 6).

3. Couverture de toit ou revêtement de façade selon la revendication 1 ou 2, caractérisé en ce que les nervures (4, 5, 6) sont pourvues sur leurs flancs de moulures, dans lesquelles sont enserrées élastiquement des plaques transparentes, de préférence en matière plastique.

4. Couverture de toit ou revêtement de façade selon l'une des revendications 1 à 3, caractérisé en ce que, entre les étriers de maintien (3) et la partie de bâtiment (10, 11, 12) portant la couverture de toit ou le revêtement de façade, est disposée une couche (13) en matériau isolant de la chaleur.

5. Couverture de toit ou revêtement de façade selon l'une des revendications 1 à 4, caractérisé en ce que les étriers de maintien (3) sont cannelés dans la zone des canaux (9).

6. Couverture de toit ou revêtement de façade selon l'une des revendications 1 à 5, caractérisé en ce que la couche (13) en matériau isolant de la chaleur est cannelée dans la zone des canaux (9).

7. Couverture de toit ou revêtement de façade selon l'une des revendications 1 à 6, caractérisé en ce que le contre-lattis (11) est disposé des deux côtés entre deux feuilles aérées étanches à l'eau.

8. Couverture de toit ou revêtement de façade selon l'une des revendications 1 à 7, caractérisé en ce que la table-support (15), aérée par derrière, étanche à l'eau, présente une épaisseur minimale de 0,3 cm, de préférence une épaisseur de 2 cm et est isolante de la chaleur.

9. Couverture de toit selon l'une des revendications 1 à 8, caractérisée en ce que les canaux (9) ménagés entre la nervure médiane (5), le panneau (2) et une nervure (4) située extérieurement sont parcourus par l'agent de travail dans un sens, tandis que les canaux (9) ménagés entre la nervure médiane (5) et l'autre nervure (6) située extérieurement sont parcourus dans le sens contraire, et en ce que les canaux (9) ménagés d'un côté et de l'autre de la nervure médiane (5) sont reliés, de préférence du côté des gouttières, par des pièces tubulaires (19, 19a) et les extrémités des canaux (9) situées du côté du faîte sont raccordées à la conduite d'amenée ou la conduite de retour du circuit de l'agent.

10. Couverture de toit selon la revendication 1, caractérisée en ce que les canaux individuels (9) sont reliés par des pièces tubulaires (19, 19a) d'égale longueur.

11. Couverture de toit selon la revendication 10, caractérisée en ce que les pièces tubulaires (19, 19a) sont recourbées en forme de U.

12. Procédé pour la fabrication d'une plaque, panneau ou autre pour une couverture de toit ou un revêtement de façade selon l'une des revendications 1 à 11, caractérisé en ce que dans un bloc de métal fabriqué de façon quelconque, on ménage, comme connu en soi, des alésages correspondant au nombre et à la position des canaux désirés, de préférence par forage profond, en ce que l'on introduit dans les alésages, comme connu en soi, un agent séparateur, on lamine à chaud le bloc de métal, comme connu en soi, dans la direction des alésages, après le liminage à chaud l'on fraise de tous côtés le bloc laminé, après quoi l'on dégrossit à froid le bloc de laminage à la dimension de l'épaisseur de paroi pour la plaque, panneau ou autre, on rogne éventuellement la bande laminée, et en ce que l'on forme les nervures par formage par roulage et ensuite l'on constitue les canaux, comme connu en soi, par insufflation.

## Claims

1. Roof covering or facade facing with plates, panels (2) or the like of sheet metal, preferably copper, which are fixed by means of holding brackets (3) to a part (12) which carries the roof covering or facade facing of buildings, wherein the plates, panels (2) or the like have ribs (4, 6) extending along their longitudinal edges and preferably one rib (5) extending in the middle, outward-bent hooking flanges (7, 8) of the holding brackets (3) engaging with the ribs, one of which hooking flanges can be introduced into a rib (4, 6) only in the position which is inclined in the direction transverse to a plate, panel (2) or the like and can be hooked in by pivoting the plate, panel (2) or the like and/or the holding bracket (3), whilst the remaining ribs (4, 5, 6) can be snapped into the other hooking flange (7, 8) or onto a rib (4, 5, 6), characterised in that, between two ribs (4, 5, 6) in each case, at least one channel (9) for carrying a working medium which absorbs energy from the surroundings of the plate, panel (2) or the like is arranged parallel to the ribs (4, 5, 6), and the channel or channels (9) are arranged within the wall of the plate, panel (2) or the like and the wall thickness of the channels (9) differs from the wall thickness of the plates, panels (2) or the like and preferably is equal to half the wall thickness of the panels, plates (2) or the like, and that, with the interposition of a waterproof web (15), aerated on both sides and preferably of a thermoplastic, cross-battens (11) are placed onto the part (10) which carries the roof covering or facade facing, of the buildings.

2. Roof covering or facade facing according to Claim 1, characterised in that, between two ribs (4, 5, 6) in each case, two channels (9) are provided, the distance of which from one another is substantially greater than their distance from the ribs (4, 5, 6).

3. Roof covering or facade facing according to Claim 1 or 2, characterised in that the ribs (4, 5, 6) are provided, on their flanks, with beads, into which transparent plates, preferably of plastic, are resiliently clamped.

4. Roof covering or facade facing according to one of Claims 1 to 3, characterised in that a layer (13) of a heat-insulating material is arranged between the holding brackets (3) and the part (10, 11, 12), which carries the roof covering or facade facing of the building.

5. Roof covering or facade facing according to one of Claims 1 to 4, characterised in that the holding brackets (3) are grooved in the zone of the channels (9).

6. Roof covering or facade facing according to one of Claims 1 to 5, characterised in that the layer (13) of heat-insulating material is grooved in the zone of the channels (9).

7. Roof covering or facade facing according to one of Claims 1 to 6, characterised in that the cross-battens (11) are arranged between two waterproof aerated sheets.

8. Roof covering or facade facing according to one of Claims 1 to 7, characterised in that the waterproof web (15), aerated on the back, has a minimum thickness of 0.3 cm, preferably a thickness of 2 cm, and is heat-insulating.

9. Roof covering according to one of Claims 1 to 8, characterised in that working medium flows in one direction through the channels (9) arranged between the middle rib (5), the plate (2) and a rib (4) located on the outside, whilst the flow through the channels (9) arranged between the middle rib (5) and the other ribs (6) located on the outside is in the other direction, and that the channels (9) located on the nearside and farside of the middle ribs (5) are connected by means of pieces of pipe (19, 19a), preferably on the side of the eaves, and the ends of the channels (9), located on the ridged side, are connected to the inlet or outlet line of the circulation of the medium.

10. Roof covering according to Claim 1, characterised in that the individual channels (9) are connected by pieces of pipe (19, 19a) of equal length.

11. Roof covering according to Claim 10, characterised in that the pieces of pipe (19, 19a) are bent in the shape of a U.

12. Process for manufacturing a plate, panel or the like for a roof covering or facade facing according to one of Claims 1 to 11, characterised in that bores corresponding to the number and position of the desired channels are made, in a manner known per se, preferably by deep-boring, in a metal block produced by any desired method, that a parting compound is introduced into the bores, as known per se, the metal block is hot-rolled, as known per se, in the direction of the bores, the rolled block is milled on all sides after hot-rolling, and the rolled block is then cold-rolled down to the dimension of the wall thickness of the plate, panel or the like, the rolled strip is trimmed, if appropriate, and that the ribs are produced by roll-forming and the channels are then produced by inflation, as known per se.

Fig 1

Fig 2

Fig 3